# EUROPEAN PATENT APPLICATION

(11) **EP 0 659 956 A1**
(43) Date of publication of application: **28.06.1995**
(21) Application number: 94309782.4
(22) Date of filing: 23.12.1994
(51) Int. Cl.: E04H 4/12, C02F 1/68

(54) **Feeder device**

(30) Priority: 24.12.1993 GB 9326448
(71) Applicant: OLIN (U.K.) LIMITED, Cutnall Green, Droitwich, Worcestershire WR9 0NS (GB)
(72) Inventor: Lipscombe,Michael John, Southampton Hampshire SO1 4PY (GB); Jones,Alan, Willington, Nr.Derby (GB)
(74) Representative: Wilson, Nicholas Martin

(57) **Abstract**

A feeder device (1) for introducing chemical (25) into a pool (101) comprises a body (3) defining a flow path (9) for the passage of pool water, a feeder (19) opening into the flow path (9) retaining a supply of chemical (25) to be exposed to erosion by pool water caused to flow along the flow path (9), and shield means (19) for partially shielding the chemical with respect to the flow of water. In use, the shield means (19) and chemical (25) are relatively movable to one another, to selectively regulate the degree of exposure of the chemical (25) to the flow of pool water.

A method of introducing chemical using the feeder device (11) and a system (100, 120) arranged to incorporate the device and to perform the method are also disclosed.

## Description

This invention relates to a feeder device particularly a feeder device for introducing chemical into a swimming pool.

Swimming pools are normally treated by a chlorine donor. Calcium Hypochlorite is one of the more popular of these donors but is usually available in granular form. However, calcium hypochlorite has an inherent characteristic of forming scale, blockage and sedimentation which has caused other types of feeders to malfunction.

A system for treating water is disclosed in US-A-4732689. This system comprises two vertical feeder tubes containing chemical tablets, extending into a bath. The bath receives water from a main via an inlet branch pipe. The bath includes a linear weir, thus rendering the level of water in the bath directly proportional to the flow of water into the bath. Vertical slots extend from the lower end of each of the feeder tubes, thus exposing the tablets to the water. Thus the area of tablet exposed to water is directly proportional to the flow rate of water through the system.

The linear weir of this device is a precision engineered component, and the system is entirely dependent on flow rate. The device also relies on there being sufficient chemical tablets in the feeders that the stacks extend above the water surface in the bath for the entire range of the level of the surface. Thus a large quantity of chemical must be stocked.

An object of the present invention is to provide an improved feeder device.

According to the present invention there is provided a feeder device for introducing chemical into a pool comprising a body defining a flow path for the passage of pool water, a feeder opening into the flow path retaining a supply of chemical to be exposed to erosion by pool water caused to flow along the flow path, and shield means for partially shielding the chemical with respect to the flow of water, in use the shield means and chemical being relatively movable to one another to selectively regulate the degree of exposure of the chemical to the flow of pool water.

The shield means may be movable to regulate the degree of exposure of the chemical to the flow of pool water. Preferably, the shield means comprises a portion of the feeder extending into the flow path, and the feeder further includes interengaging means on the feeder and on the body whereby the feeder is movably engaged with the body, in use movement of the feeder in a direction transverse to the flow of water moving the shield means with respect to the chemical thereby exposing more or less chemical allowing to the direction of movement.

The interengaging means may comprise co-operable screw threads on the feeder and body.

The feeder is preferably threadingly engaged with the flow tube whereby, screwing or unscrewing the feeder will determine the amount of chemical exposed to the flow of pool water.

Preferably, the chemical is in tablet form. The tablet may be gravity fed or may be biassed into position in the flow tube by suitable spring means.

Suitably, a platform may be disposed opposite the feeder on which the lowermost tablet rests in use. If desired, more than one feeder may open into the flow path.

The feeder device may be further selectively variable by the provision of isolating and/or control valve means which may partially or wholly isolate the feeder device from the flow of pool water as desired.

The invention also includes a method of treating swimming pool water with a chemical such as calcium hypochlorite comprising the steps of:
passing a flow of pool water along a flow path through a feeder device; and
holding a supply of chemical in the feeder device so as to be exposed to the flow of pool water whereby chemical is introduced in the pool water by erosion.

Preferably the feeder device is as aforesaid.

The invention further includes a water purification system comprising a feeder device adapted to receive a flow of swimming pool water from a main flow of a filter/heater circulation system, and to return said flow of swimming pool water to said main flow.

Alternatively, the feeder device can be fed by any source of water be it mains water, swimming pool water or water of any type which, if desired, may be first collected in a storage header tank before delivery to the feeder device.

Preferably the feeder device is as aforesaid.

The system may include sample means adapted to sample the concentration of the chemical in the main flow for control of said feeder device, and which said feeder device is arranged to return said flow to said mark flow downstream of said sample means.

Alternatively, the feeder device may be arranged to receive the flow of water downstream of a main pump of the circulation system, and to return said flow upstream of said pump.

The invention will now be described by way of example with reference to the accompanying diagrammatic drawings in which:
Figure 1 is a side elevation of a preferred feeder device in accordance with the invention;
Figure 2 is a diagrammatic section on 2-2 in Figure 1;
Figure 3 is a schematic diagram of a first water treatment system for a swimming pool including a feeder device according to the invention;
Figure 4 is a schematic diagram of a second water treatment system for a swimming pool including a feeder device according to the invention;
Figure 5 is an elevation from the downstream side of a second feeder device in accordance with the invention;
Figure 6 is a section on 6-6 in Figure 5 and
Figure 7 is a schematic side elevation of a third feeder device in accordance with the invention.

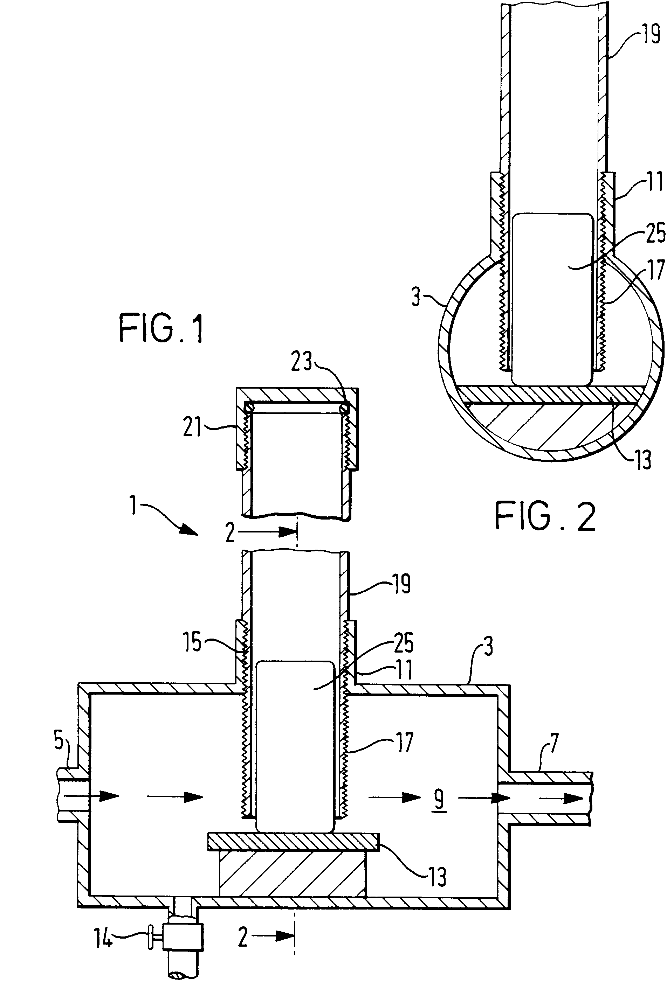

In Figures 1 and 2 a feeder device (1) comprises a flow tube (3) having an inlet (5) and outlet (7) for receiving a flow of pool water indicated generally by arrows (9).

The flow tube (3) has a tee-branch (11) centrally disposed with respect to the inlet and outlet (5,7) and opening into the flow tube (3) diametrically opposite a raised platform (13). The flow tube also includes a drain valve (14) as shown in Figure 1.

The tee-branch (11) has an internal screwthread (15) which threadingly engages with an external screw-thread (17) on the outside of one end of a feeder tube (19). The other end of the feeder tube (19) is closed by a screw cap (21) sealed to the feeder tube (19) by an O-ring (23).

In use, the feeder device (1) is placed directly in the path of pool water and the feeder tube (19) is provided with one or more pool chemical tablets (25), known as DURATION (Registered Trade Mark), the lowermost tablet (25) resting on platform (13). The feeder tube (19) is then screwed relative to the tee-branch (11) in which it is engaged to determine the amount of chemical being exposed to the flow of water. Suitably the gap between the bottom of the feeder tube (19) and the platform (13) is about 3/4'' (1.90cm).

However, by raising or lowering the feeder tube (19), the amount of chemical chlorine being released into the pool water can be determined.

A flowmeter/indicator and control isolating valves (not shown) allow accurate setting by the user to increase or decrease chlorine output as desired.

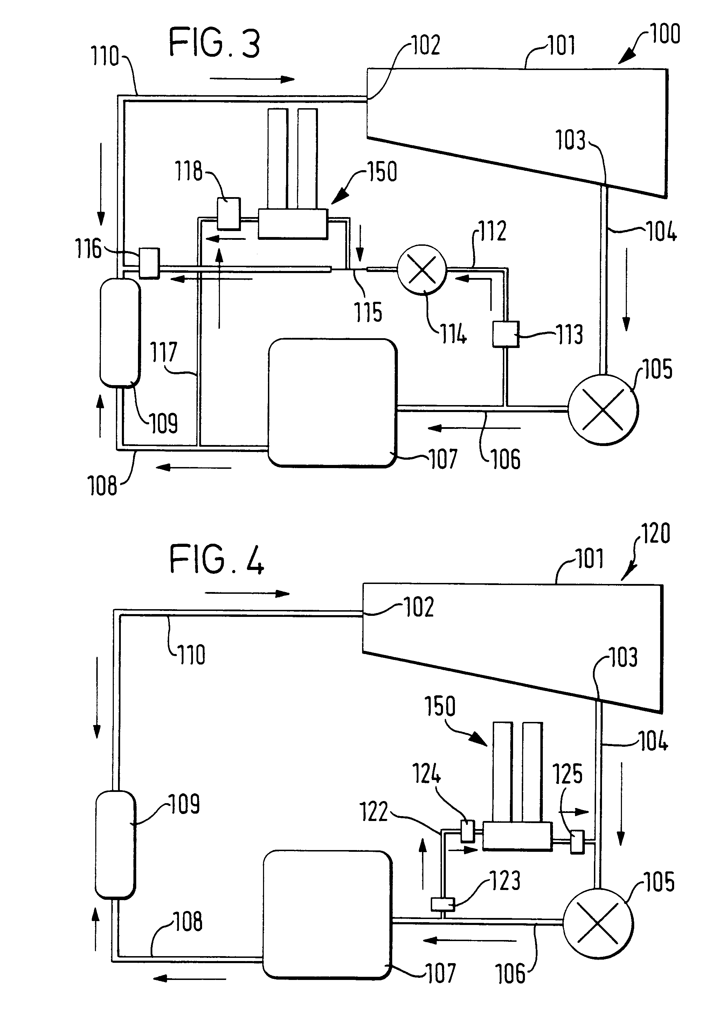

Figure 3 illustrates a first water treatment system 100 for a swimming pool 101 provided with an inlet 102 and an outlet 103. An outlet pipe 104 extends from the outlet 103 to an inlet of a main circulating pump 105. An outlet of the pump 105 is connected via a first main pipe 106 to an inlet of a filter 107. A second main pipe 108 extends from an outlet of the filter 107, to an inlet of a water heater 109. A third main pipe 110 extends from an outlet of the water heater 109 to the inlet 102 of the swimming pool 100, completing the main flow circuit.

A first branch pipe 112 branches from the first main pipe 106 and rejoins the main flow circuit by connection to third main pipe 110. The first branch pipe 112 includes, in series from upstream to downstream, a first isolating valve 113, a booster pump 114, a venturi 115, and a second isolating valve 116.

A second branch pipe 117 branches from second main pipe 108 and extends to join the first branch pipe 112 at the venturi 115. The second branch pipe 117 includes, in series from upstream to downstream, a control valve 118 and a feeder device 150.

Referring now to Figure 4, a second water treatment system 120 for the swimming pool 101 includes a main flow circuit as described with reference to Figure 3. However, a simplified feeder circuit is provided. A branch 122 branches from first main pipe 106 downstream of the main pump 105 and rejoins the main flow circuit upstream of the main pump 105 by connection to the outlet pipe 104. The branch pipe 122 includes in series from upstream to downstream a first isolating valve 123, a control valve 124, a feeder device 150 and a second isolating valve 125.

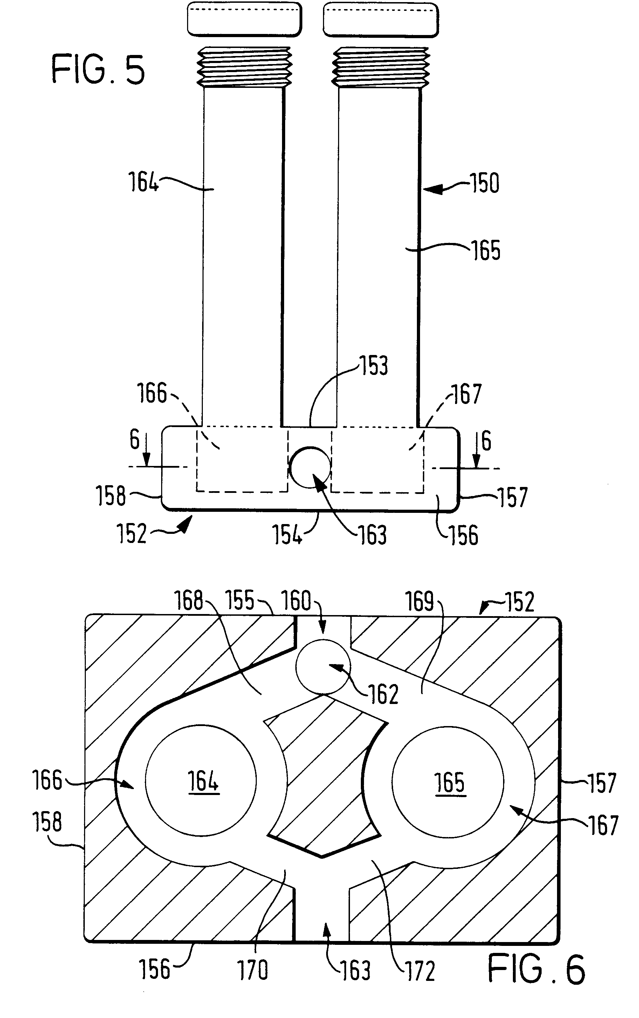

Figures 5 and 6 illustrate the feeder device 150 shown schematically in figures 3 and 4 except that in figures 3 and 4 the feeder tubes are shown aligned for simplicity. The feeder device 150 comprises a flat rectangular body 152 including upper and lower faces 153, 154, upstream and downstream faces 155, 156 and side faces 157, 158. An inlet bore 160 of circular cross section extends from the centre of the upstream face 155, within the body 152. An auxiliary inlet bore 162 extends from the upper face 153, proximate the edge adjoining the upstream face 155, and joins the inlet bore 160. An outlet bore 163 extends within the body 152 from the downstream face 156 coaxially with the inlet bore 160.

Two feeder tubes 164, 165 extend perpendicularly with respect to the upper face 153, and are arranged symmetrically about the axis of the inlet bore 160 and the outlet bore 163. The feeder tubes 164, 165 are of substantially the same description as the tee-branch 11 above described in connection with Figures 1 and 2.

The feeder tubes 164, 165 threadingly extend within the body 152 to respective tablet dissolving chambers 166, 167, and hence may be adjusted in the same way as the feeder tube 19 above. Each tablet dissolving chamber is cylindrical and coaxial with the respective feeder tube, a chemical tablet in use emerging from the feeder tube and resting on the floor of the tablet dissolving chamber.

The inlet bore 160 splits into two inlet branches 168, 169, each of which extends to a respective tablet dissolving chamber. Each tablet dissolving chamber has an outlet branch 170, 172, which join and form the outlet bore 163.

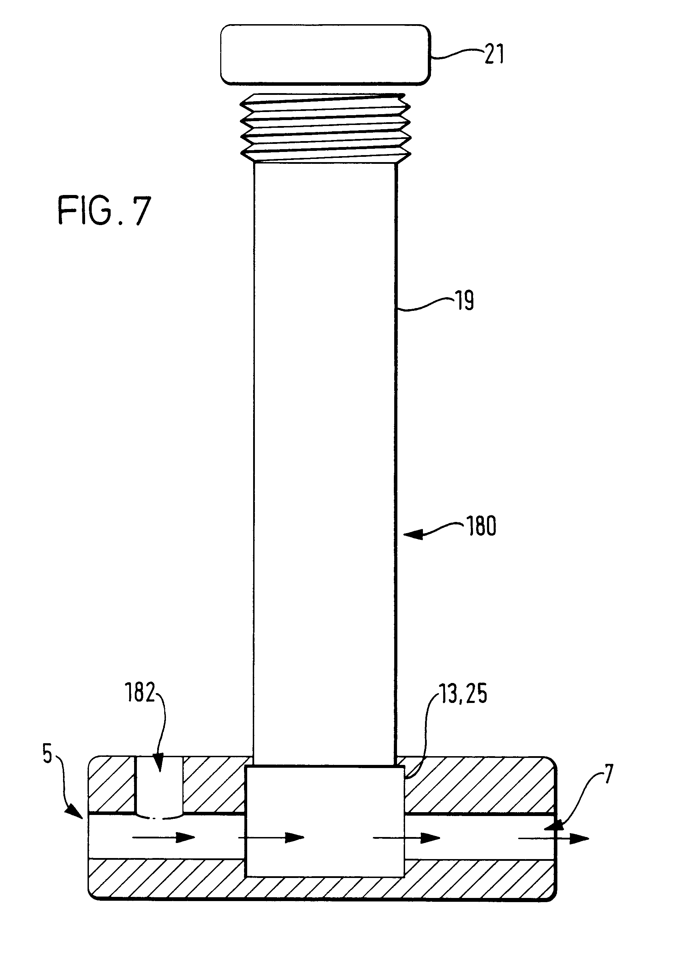

The feeder device 180 of Figure 7 is markedly similar to the feeder device 1 of Figure 1, inasmuch identical features of the two are designated with common reference numerals. The feeder device 180 further includes an alternative threaded inlet 182 extending through the upper wall of the inlet 5, parallel to the feeder tube 19.

The feeder device 1, 150, 180 of the present invention is designed to operate using the motive power of the existing main circulating pump of the swimming pool of which the secondary side will feed water to the inlet (5) of the device and the primary side will accept water back from the outlet (7) of the device, allowing chemical to be introduced into the pool circulatory system.

Where pools are fitted with auto dosing control, the feeder device 1, 150, 180 is located so as to introduce treated water downstream of the existing filter/heater thus avoiding the introduction of chemical upstream of the auto control sample cell, which would otherwise provide a false reading.

The removable cap (21) allows chemicals to be replenished after first isolating the feeder device 1, 150, 180 by closing both isolation valves.

The feeder device 1, 150, 180 of the present invention is totally variable by either:
- partial closure of the isolating and control valves upstream of the inlet (5) and downstream of the outlet (7) thereby reducing the amount of pool water through the feeder; or,
- by raising or lowering the feeder tube (19) to increase or decrease the amount of chemical to be exposed.

The water treatment system 100 of Figure 3 is arranged so that the feeder device (150) introduces treated water downstream of the filter 107 and heater 109 - appropriate for use in conjunction with an auto dosing control system. A portion of the flow for the main flow circuit is removed upstream of the main circulating pump 105, and is boosted by the booster pump 114. Another portion of the flow is removed downstream of the filter 107, and passed through the feeder device (150). Flow is maintained in this second branch 117 in the preferred direction by means of the venturi 115, which produces a region of low pressure. The flow through these branches 112, 117 rejoins the main flow circuit downstream of the filter 107 and heater 109, thus ensuring an absence of false control readings on the auto control sample cell, which would be caused if the feeder 150 fed chemical with the flow upstream of the filter/heater system 100. The auto dosing control system is operative to control the opening and closing of the control valve 118, thus controlling the flow of water through the second branch 117 and therefore the introduction of chemical into the pool water.

The water treatment system 180 of Figure 4 is configured rather differently. This is a simpler and less sophisticated system whereby branch 122 removes a portion of the main flow downstream of the main circulating pump 105, the flow returning to the main flow upstream of the pump 105. Control valve 124 and feeder 150 may be used to alter the rate of erosion of the chemical tablet, but auto dosing control is not appropriate as chemical is introduced into the main flow upstream of the filter 107 and therefore if a sample cell, which would result in false readings. However, this system does not require a booster pump, and thus has economic advantages both with regard to initial outlay and to maintenance costs.

The feeder device is preferably made entirely of PVC, but may be any other suitable material.

All of the inlets and outlets of the above embodiments of the invention may be threaded to facilitate sealable attachment of piping thereto. The feeder tubes may be constructed of transparent materials such as clear PVC or provided with a translucent window to facilitate observation of the upper level of the chemical tablet and therefore the quantity of tablet remaining in the feeder tube.

## Claims

1. A feeder device for introducing chemical into a pool comprising a body defining a flow path for the passage of water, a feeder opening into the flow path retaining a supply of chemical to be exposed to erosion by water caused to flow along the flow path, and shield means for partially shielding the chemical with respect to the flow of water, in use the shield means and chemical being relatively movable to one another to selectively regulate the degree of exposure of the chemical to the flow of water.

2. A feeder device according to claim 1 wherein the shield means is movable to regulate the degree of exposure of the chemical to the flow of water.

3. A feeder device according to claim 1 or 2 wherein the shield means comprises a portion of the feeder extending into the flow path, and the feeder further includes interengaging means on the feeder and on the body whereby the feeder is movably engaged with the body, in use movement of the feeder in a direction transverse to the flow of water moving the shield means with respect to the chemical thereby exposing more or less chemical according to the direction of movement.

4. A feeder device according to claim 3 wherein the interengaging means comprises cooperative screw threads on the feeder and the body.

5. The feeder device of any preceding claim further including isolation valve means arranged to selectively isolate partially or wholly the feeder device from the flow of the pool water as desired.

6. The feeder device of any preceding claim further including control valve means arranged in use to control the flow of pool water along the flow path as desired.

7. The feeder device of any preceding claim including a platform disposed opposite the feeder on which a lowermost chemical tablet rests in use.

8. A feeder of any preceding claim including spring means adapted to bias chemical tablets in use into position on the flow path.

9. The feeder device of any preceding claim wherein the feeder includes observation means enabling observation of the amount of chemical within the feeder.

10. The feeder device of claim 9 wherein the observation means comprises a translucent wall of the feeder.

11. The feeder device of any preceding claim wherein more than one feeder opens into the flow path.

12. A method of treating swimming pool water with a chemical such as calcium hypochlorite comprising the steps of:
passing a flow of water along a flow path through the feeder device of any preceding claim; and
holding a supply of chemical in the feeder device so as to be exposed to the flow of water whereby chemical is introduced in the pool water by erosion.

13. The method of claim 12 wherein a chemical tablet is held in the flow path by the feeder by means of gravity.

14. The method of claim 12 or 13 wherein the supply of water arranged to flow along the flow path is selected from pool water, mains supply or storage supply.

15. A water purification system for a swimming pool comprising a feeder device according to any one of claims 1-11 adapted to receive a flow of swimming pool water from a main flow of a filter/heater circulation system, and to return said flow of swimming pool water to said main flow.

16. The system of claim 15 further including sample means adapted to sample the concentration of the chemical in the main flow for control of said feeder device, and wherein said feeder device is arranged to return said flow to said main flow downstream of said sample means.

17. A system of claim 15 wherein the feeder device is arranged to receive the flow of water downstream of a main pump of the circulation system, and to return said flow upstream of said pump.
